# EUROPEAN PATENT APPLICATION

(11) **EP 2 469 124 A2**
(43) Date of publication of application: **27.06.2012**
(21) Application number: 11194826.1
(22) Date of filing: 21.12.2011
(51) Int. Cl.: F16G 11/10, F16G 11/04

(54) **Cord end**

(30) Priority: 23.12.2010 US 928967
(71) Applicant: Duraflex Hong Kong Limited, Hong Kong (CN)
(72) Inventor: Chan, Yick Fai, Hong Kong (CN)
(74) Representative: Sonn & Partner Patentanwälte

(57) **Abstract**

A cord end (10, 50, 60) has a main body (11, 51, 61) with a bottom surface (23) and a top surface (22) and a covering portion (12, 55) attached to the main body (11, 51, 61) that can be folded over the bottom surface (23) and secured to the bottom surface (23). The main body (11, 51, 61) has two cord-receiving apertures (13, 14; 52, 53; 62, 63) therein. Each aperture (13, 14; 52, 53; 62, 63) has a cord-securing slot (16, 17; 58, 59; 66, 67) in communication with the apertures (13, 14; 52, 53; 62, 63) such that a cord (30) is secured to the cord end (10, 50, 60) by threading the cord (30) from the bottom surface (23), through one aperture (13; 52; 62), across the top surface (22) and through the other aperture (14; 53; 63) and out the bottom surface (23), pulling the cord (30) so that the cord (30) slides into the cord securing slots (16, 17; 58, 59; 66, 67), and snapping the covering portion (12, 55) over the bottom surface (23).

## Description

### BACKGROUND OF THE INVENTION

### 1. Field of the Invention

The present invention relates to a cord end. In particular, the present invention relates to a cord end that secures the end of a cord within the cord end and allows for simple assembly and use.

### 2. The Prior Art

Cord ends are used at the end of bungee and other cords to prevent fraying of the cords and to allow them to be pulled more easily. In general the cord is fed into the cord end and locked in place.

Most cord ends are formed from two separate pieces that are snapped together to secure the end of the cord. Thus, assembly of the cord ends on the cord is cumbersome and the material cost is high.

### SUMMARY OF THE INVENTION

It is therefore an object of the invention to provide a cord end that consists of a single piece and which can be attached to the cord in a simple and secure manner.

The invention consists of a cord end having a main body having a bottom surface and a top surface and a covering portion attached to the main body that can be folded over the bottom surface and secured to the bottom surface. The main body has two cord-receiving apertures therein. Each aperture has a cord-securing slot in communication with the apertures, such that a cord is secured to the cord end by threading the cord from the bottom surface, through one aperture, across the top surface and through the other aperture and out the bottom surface, pulling the cord so that the cord slides out of the apertures and into the cord securing slots, and snapping the covering portion over the bottom surface. The free end of the cord can be trimmed prior to snapping the covering portion over the bottom surface, to prevent the cord from interfering with the operation of the covering portion. This particular arrangement of the cord as it is fed through the apertures creates two Z-shaped profiles from the cord. This particular profile prevents the cord from slipping once it has been fed into the main body and tightened.

In one embodiment, the free end of the covering portion has a latch that snaps into a corresponding groove in the bottom surface when the covering portion is folded over the bottom surface. In another embodiment, the covering portion has a plurality of latches along longitudinal sides thereof. These latches snap into the apertures in the main body when the covering portion is folded over the bottom surface.

In one embodiment the covering portion is attached to the main body adjacent the top surface, and is hinged to allow the covering portion to be folded around the main body and over the bottom surface. Preferably the cord end is molded from a single piece. The cord end can be made of any suitable material, such as acetal or any other moldable material.

In an alternative embodiment, the cord end has a main body having a bottom surface and a top surface and two cord-receiving apertures. Each aperture has a cord-securing slot in communication with the apertures, and cord-gripping teeth along the top surface. A cord is secured to the cord end by threading the cord through one aperture, across the top surface and through the other aperture, and pulling the cord so that the cord slides into the cord securing slots and is gripped by the teeth on the top surface. The main body can have openings on front and rear ends of the main body. These openings communicate with the apertures, so that a cord is threaded through one opening, through one of the apertures, across the top surface, through the other one of the apertures and out through the other one of the openings.

### BRIEF DESCRIPTION OF THE DRAWINGS

Other objects and features of the present invention will become apparent from the following detailed description considered in connection with the accompanying drawings. It is to be understood, however, that the drawings are designed as an illustration only and not as a definition of the limits of the invention.

In the drawings, wherein similar reference characters denote similar elements throughout the several views:
FIG. 1 shows a top view of a first embodiment of the cord end according to the invention;
FIG. 2 shows a bottom view of the embodiment of FIG. 1;
FIG. 3 shows a longitudinal cross-sectional view along lines III-III of FIG. 1, with a cord threaded therethrough;
FIG. 4 shows the view of FIG. 3 with the cord end cut and pulled tightly through the cord-securing slots;
FIG. 5 shows the view of FIG. 3 with the covering plate snapped closed;
FIG. 6 shows a top view of an alternative embodiment of the cord end according to the invention;
FIG. 7 shows a bottom view of the cord end according to FIG. 6;
FIG. 8 shows a bottom view of another alternative embodiment of the cord end according to the invention; and
FIG. 9 shows a top view of the cord end according to FIG. 8.

### DETAILED DESCRIPTION OF THE PREFERRED EMBODIMENT

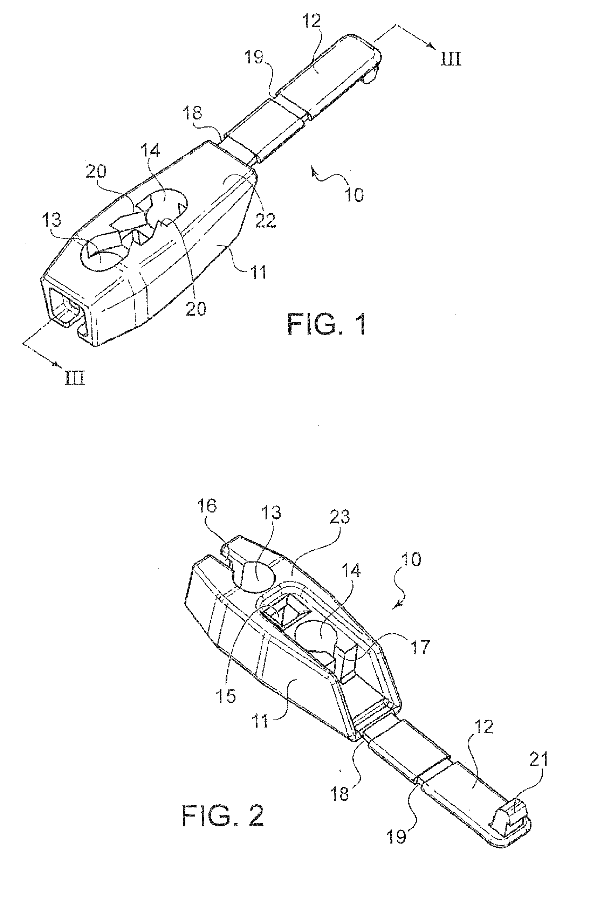

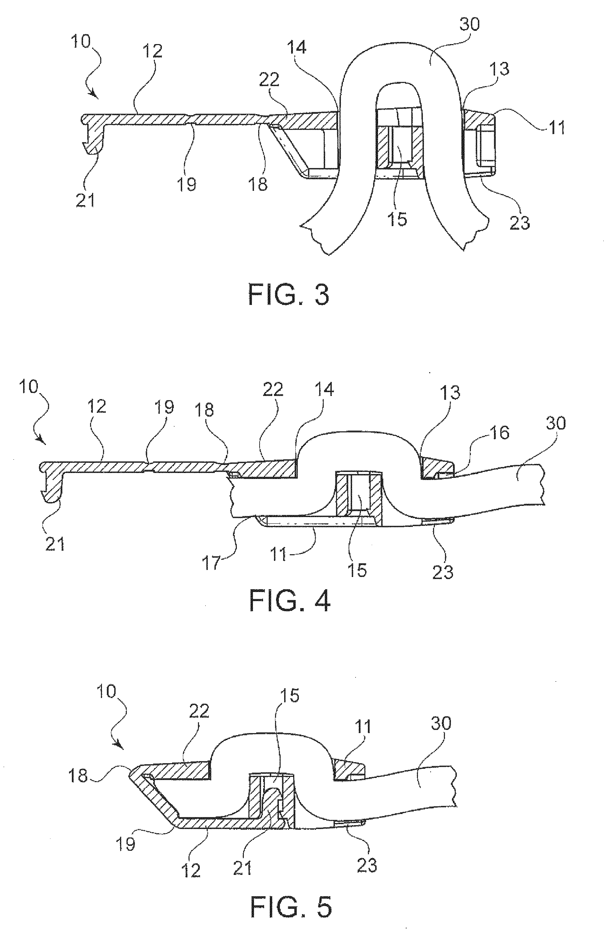

Referring now in detail to the drawings, a first embodiment of the cord end according to the invention is shown in FIGS. 1-5. Here, cord end 10 comprises a main body 11 with an attached covering portion 12. Main body 11 has two apertures 13, 14 that extend through the entire depth of main body 11. On the top surface 22 shown in FIG. 1 between apertures 13, 14 are a plurality of cord gripping teeth 20. On the bottom surface 23 shown in FIG. 2 is a groove 15 between apertures 13, 14. Covering portion 12 can be folded around and over the bottom surface 23 of main body 11, using hinges 18, 19, and then snapped into groove 15 with latch 21 to secure covering portion over the bottom surface 23 of main body 11, as shown in FIG. 5.

In use, as shown in FIGS. 3-5, a cord 30 is threaded from bottom surface 23, through aperture 13, across top surface 22, where it is gripped by teeth 20, and down through aperture 14. As shown in FIG. 4, at this point, cord 30 is pulled longitudinally so that cord 30 slides into slots 16 and 17 on bottom surface 23. This creates a double "Z" shaped configuration of cord 30, which along with teeth 20 and slots 16, 17, prevents any slippage of cord 30 in this position. The end of cord 30 can then be trimmed to be flush with the end of cord end 10 and covering portion 12 can be folded over bottom surface 23 and snapped into groove 15 with latch 21, as shown in FIG. 5. Thus, cord 30 is securely retained inside cord end 10.

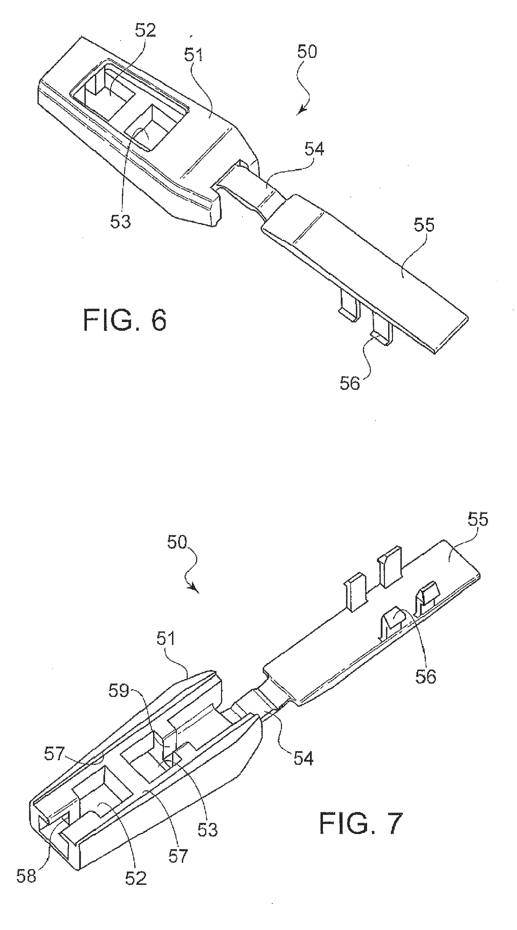

An alternative embodiment of the cord end 50 is shown in FIGS. 6 and 7. Cord end 50 has a main body 51, apertures 52, 53, cord securing slots 58, 59 and a covering portion 55 being bound to the main body 51 via hinge 54. Cord end 50 operates the same as cord end 10 of FIGS. 1-5 except that to secure covering portion 55 onto the bottom surface of main body 51, latches 56, which are disposed along the side edges of covering portion 55, are snapped under ledges 57 of main body 51. Ledges 57 extend along the side edges of main body 51 and are integrally formed with it.

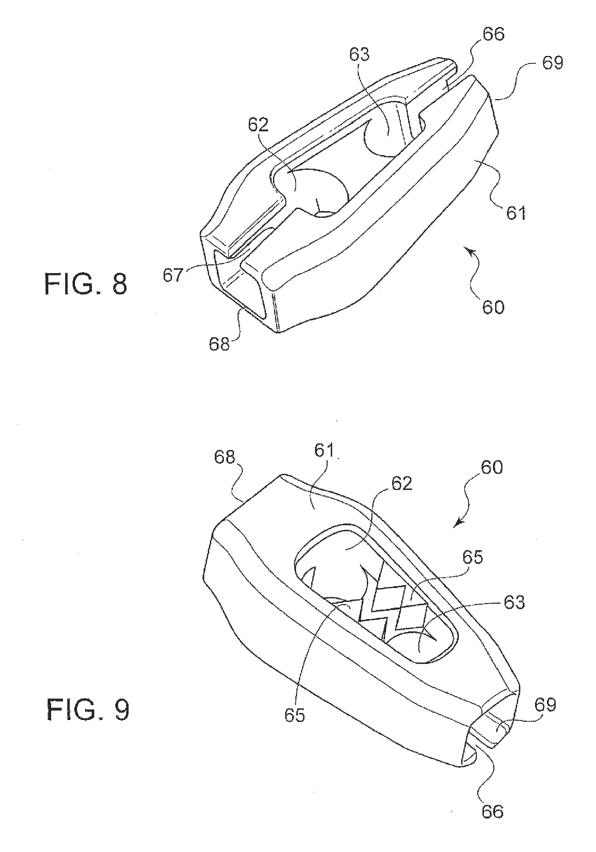

A third embodiment of cord end 60 is shown in FIGS. 8 and 9. Here cord end 60 has a main body 61, apertures 62, 63, cord securing slots 66, 67 on the bottom side and cord gripping teeth 65 on the top side. Cord end 60 works the same was as cord end 10 shown in FIGS. 1-5 and cord end 50 shown in FIGS. 6 and 7, except that there is no covering portion. The cord (not shown) is held in main body 61 by the Z-shaped formation formed by apertures 62, 63, slots 66, 67 and teeth 65. The cord is fed from the bottom surface shown in FIG. 8 through aperture 63, across the top surface shown in FIG. 9 and back through aperture 62, and then pulled through slots 66, 67, to form the double Z-shaped configuration shown in FIGS. 4 and 5 with respect to the first embodiment. The ends 68, 69 of cord end 60 are open so that the cord can extend out one of the ends and the free end of the cord can be trimmed so that it does not extend beyond cord end 60.

The cord end of the present invention is a simple, inexpensive and aesthetically pleasing way to secure the end of a cord. This creates a convenient zipper pull or other type of mechanism and prevents the end of the cord from fraying over time.

Accordingly, while only a few embodiments of the present invention have been shown and described, it is obvious that many changes and modifications may be made thereunto without departing from the spirit and scope of the invention.

## Claims

1. A cord end (10, 50, 60) comprising:
a main body (11, 51, 61) having a bottom surface (23) and a top surface (22); and
a covering portion (12, 55) attached to the main body (11, 51, 61), said covering portion (12, 55) being adapted to be folded over the top surface (22) and secured to the top surface (22);
wherein the main body (11, 51, 61) has two cord-receiving apertures (13, 14; 52, 53; 62, 63) therein, each aperture (13, 14; 52, 53; 62, 63) having a cord-securing slot (16, 17; 58, 59; 66, 67) in communication with the apertures (13, 14; 52, 53; 62, 63), such that a cord (30) is secured to the cord end (10, 50, 60) by threading the cord (30) from the bottom surface (23), through one aperture (13; 52; 62), across the top surface (22) and through the other aperture (14; 53; 63) and out the bottom surface (23), pulling the cord (30) so that the cord (30) slides into the cord securing slots (16, 17; 52, 53; 62, 63), and snapping the covering portion (12, 55) over the bottom surface (23).

2. The cord end (10, 50, 60) according to claim 1, wherein the covering portion (12, 55) has a latch (21, 56) on a free end of the covering portion (12, 55) and wherein the latch (21, 56) snaps into a corresponding groove (15) in the bottom surface (23) when the covering portion (12) is folded over the bottom surface (23).

3. The cord end (10, 50, 60) according to claim 1, wherein the covering portion (12, 55) has a plurality of latches (21, 56) along longitudinal sides thereof, and wherein said latches (21, 56) snap into the apertures (52, 53) in the main body (11, 51, 61) when the covering portion (12, 55) is folded over the bottom surface (23).

4. The cord end (10, 50, 60) according to claim 1, wherein the covering portion (12, 55) is attached to the main body (11, 51, 61) adjacent the top surface (22), and wherein the covering portion (12 ,55) is hinged to allow the covering portion (12, 55) to be folded around the main body (11, 51, 61) and over the bottom surface (23).

5. The cord end (10, 50, 60) according to claim 1, wherein the cord end (10, 50, 60) is molded from a single piece.

6. A cord end (10, 50, 60) comprising a main body (11, 51, 61) having a bottom surface (23) and a top surface (22) and two cord-receiving apertures (13, 14; 52, 53; 62, 63) therein, each aperture (13, 14; 52, 53; 62, 63) having a cord-securing slot (66, 67) in communication with the apertures (13, 14; 52, 53; 62, 63), and cord-gripping teeth (20, 65) along the bottom surface (23), such that a cord (30) is secured to the cord end (10, 50, 60) by threading the cord (30) through one aperture (13; 52; 62), across the top surface (22) and through the other aperture (14; 53; 63), and pulling the cord (30) so that the cord (30) slides into the cord securing slots (66, 67) and is gripped by the teeth (20, 65) on the top surface (22).

7. The cord end (10, 50, 60) according to claim 6, wherein the main body (11, 51, 61) further comprises openings on front and rear ends (68, 69) of the main body (11, 51, 61), said openings communicating with the apertures (13, 14; 52, 53; 62, 63), so that a cord (30) is threaded through one opening, through one of the apertures (13; 52; 62), across the top surface (22), through the other one of the apertures (14; 53; 63) and out through the other one of said openings.
